# FASCICULE DE BREVET EUROPEEN

(11) **EP 2 660 154 B1**
(45) Date de publication et mention de la délivrance du brevet: **23.06.2021**
(21) Numéro de dépôt: 13165877.5
(22) Date de dépôt: 30.04.2013
(51) Int. Cl.: B64G 1/26, B64G 1/40

(54) **Système de propulsion pour contrôle d'orbite et contrôle d'attitude de satellite**
Antriebssystem für die Kontrolle der Umlaufbahn und der Lageregelung eines Satelliten
Propulsion system for satellite orbit control and attitude control

(30) Priorité: 03.05.2012 FR 1201279
(43) Date de publication de la demande: 06.11.2013
(73) Titulaire: Thales, 92400 Courbevoie (FR)
(72) Inventeur: Celerier, Bruno, 06810 Auribeau sur Siagne (FR)
(74) Mandataire: Marks & Clerk France

(56) Documents cités:
- NL-C2- 1 032 158
- US-A- 5 020 746
- US-B1- 6 565 043
- None

## Description

La présente invention concerne le domaine des systèmes de contrôle d'orbite et le contrôle d'attitude de satellite, et plus particulièrement l'architecture des systèmes de propulsion embarqués pour le contrôle d'orbite de satellites géostationnaires de télécommunications.

Pour permettre l'utilisation des divers instruments de mission d'un satellite, tels que des systèmes de télécommunications, il convient de pouvoir contrôler la position et l'orientation du satellite en orbite. En plus de l'attraction gravitationnelle de la terre, un satellite subit plusieurs forces de plus faibles ampleurs qui perturbent progressivement sa position et son orientation. L'attraction gravitationnelle du soleil et de la lune, la déformation de la terre au niveau de l'équateur, ou encore la pression radiative solaire génèrent des dérives qu'il convient de corriger. Des systèmes de contrôle sont mis en œuvre pour maintenir d'une part l'orientation du satellite par rapport à la terre, c'est le contrôle d'attitude, et d'autre part sa position en orbite par rapport à une position idéale souhaitée, c'est le contrôle d'orbite.

Par exemple dans le cas des satellites géostationnaires, le contrôle d'orbite cherche à limiter l'inclinaison par rapport au plan équatorial, à limiter l'excentricité de l'orbite, et à limiter la dérive de la position longitudinale du satellite par rapport à la terre. Pour cela, des propulseurs sont positionnés en divers emplacements sur le satellite pour corriger la trajectoire à intervalle plus ou moins proche en appliquant une force sur le satellite. Ces opérations de maintien à poste nécessitent de pouvoir disposer d'une réserve de carburant suffisante tout au long de la vie du satellite. Pour limiter le coût et la masse des dispositifs de contrôle d'orbite, une nouvelle architecture des sytèmes de propulsion est envisagée.

Un satellite est mis en orbite par la combinaison d'un véhicule spatial lanceur et de ses propres systèmes de propulsion. Le lanceur transporte et libére le satellite sur une première orbite terrestre dite de transfert, dont le perigée est généralement bas ; une fois sur cette première orbite, un système de propulsion du satellite prend le relais pour transporter le satellite jusqu'à son orbite finale. Généralement, ce transfert est réalisé au moyen d'un propulseur satellite principal PSP consommant un carburant chimique de type ergol ou propergol, délivrant une poussée de forte puissance permettant d'atteindre rapidement l'orbite finale.

Une fois mis en station, plusieurs propulseurs secondaires de plus faibles puissances assurent le maintien en position du satellite sur l'orbite. Pour cela, des propulseurs chimiques à ergol ou des propulseurs électriques peuvent être utilisés. Dans un propulseur électrique, de type propulseur à plasma, ou propulseur à ions, des atomes de xénon sont ionisés par collision avec des électrons, créant des ions xénons. La poussée est générée lorsque les ions xénons chargés sont accélérés hors du propulseur par un champ électromagnétique. Bien que coûteux et de masse initiale importante, l'efficacité du propulseur, ou sa capacité à générer de la force par éjection de masse, aussi appelée impulsion spécifique, est sensiblement plus importante que celle des propulseurs chimiques.

Dans les systèmes connus, des propulseurs chimiques et des propulseurs électriques sont positionnés en plusieurs emplacements sur la structure du satellite pour répondre à l'ensemble des besoins de la mission, du transport de l'orbite de transfert au maintien en orbite tout au long de la vie du satellite. Les systèmes de propulsion ainsi mis en œuvre ont pour inconvénient un coût élevé et une masse élevée, des différents propulseurs et du carburant. Ces inconvénients limitent la capacité d'embarquement de charge utile du satellite.

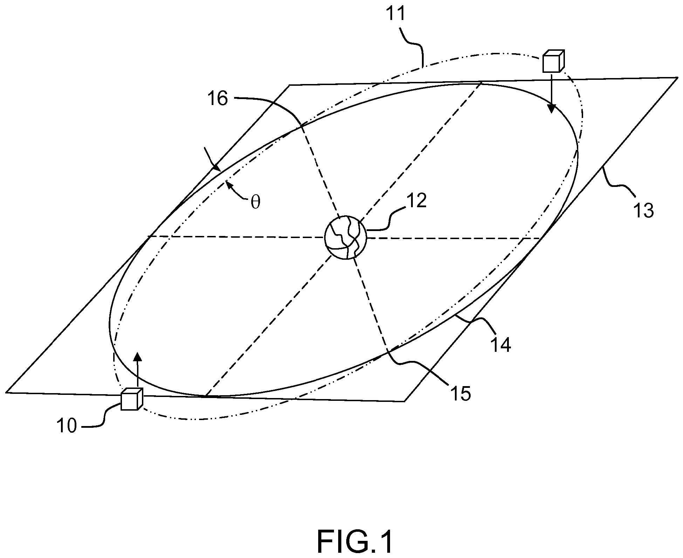

Selon l'état connu de la technique, un système de contrôle d'orbite cherche à piloter la position du satellite au travers de six paramètres orbitaux. La figure 1 représente un satellite géostationnaire 10 en orbite 11 autour de la terre 12. L'orbite 11 est inclinée d'un angle θ par rapport au plan équatorial 13 qui contient l'orbite géostationnaire idéale 14. L'orbite 11 du satellite coupe le plan équatorial 13 en deux points 15 et 16, couramment appelés nœuds orbitaux. On connaît aussi les six paramètres orbitaux utilisés pour qualifier la position d'un satellite : le demi grand-axe, l'excentricité, l'inclinaison, l'argument du noeud ascendant, l'argument du perigee, et l'anomalie vraie. Le contrôle d'orbite consiste à quantifier ces paramètres orbitaux et à réaliser les opérations nécessaires au moyen des systèmes de propulsion embarqués, pour maintenir le satellite dans une zone prédéfinie autour d'une position idéale. A titre d'exemple, pour un satellite géostationnaire, une fenêtre de dérive de plus ou moins 0,1°, représentant une largeur de presque 150km, est attribuée autour d'une position cible.

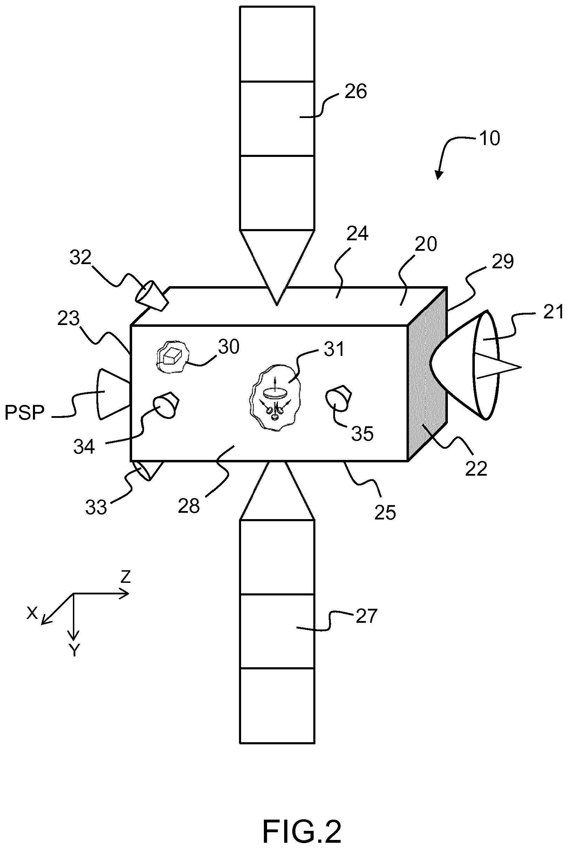

Une architecture courante d'un satellite 10, telle que représentée sur la figure 2, comprend une structure parallélépipédique 20 sur laquelle sont fixés divers dispositifs utiles au pilotage du satellite 10 et à sa mission. Des instruments de télécommunications 21 sont installés sur une face 22 dont l'orientation est maintenue en direction de la terre, communément appelée face terre. Sur une face opposée 23, communément appelée face anti-terre est positionné le propulseur satellite principal PSP qui assure notamment la poussée nécessaire au transfert de l'orbite basse vers l'orbite finale. Sur deux faces latérales opposées 24 et 25, communément appelées face Nord et face Sud, en raison de leur orientation par rapport au plan équatorial, sont positionnés deux jeux de panneaux solaires 26 et 27 permettant l'alimentation en énergie électrique des systèmes embarqués. Divers dispositifs peuvent être embarqués sur les faces latérales 28 et 29, communément appelés face Est et Ouest pour leur orientation par rapport à une longitude terrestre. Le maintien d'une orientation constante du satellite par rapport à la terre est nécessaire au bon déroulement de la mission du satellite, par exemple pour l'orientation des panneaux solaires 26 et 27 ou le pointage des systèmes de telecommunications 21 vers la terre. Cela est réalisé au moyen d'un système de contrôle d'attitude. On connaît plusieurs systèmes de contrôle d'attitude aptes à détecter et corriger les erreurs d'orientation. Ainsi, la mesure de l'orientation du satellite peut être réalisée au moyen d'un ensemble de capteur, comprenant par exemple un capteur dirigé vers la terre, positionné en face terre pour une mesure sur deux axes, tangage et roulis, par rapport à la terre et un ensemble 30 de gyroscopes pour une détection des vitesses de rotation sur trois axes. A partir de ces mesures, des corrections d'orientation du satellite autour de son centre de gravité peuvent être réalisées, par exemple au moyen d'un ensemble de roues à inertie 31 ou d'actionneurs gyroscopiques.

Un satellite équipé d'un tel système permettant le contrôle d'attitude est dit stabilisé sur trois axes. Typiquement, en contrôlant la vitesse de rotation et l'orientation des roues à inertie, on sait corriger une erreur d'orientation dans un trièdre de référence lié au satellite. Dans la suite, on appelle Z un axe dirigé vers la terre, aussi appelé axe de lacet, Y un axe perpendiculaire à l'orbite et orienté dans le sens opposé au moment cinétique de l'orbite (vers le sud pour un geostationnaire), aussi appelé axe de tangage, et X un axe formant avec Y et Z un repère orthogonal direct, aussi appelé axe de roulis qui se trouve orienté selon la vitesse dans le cas des orbites circulaires.

Pour le contrôle d'orbite, plusieurs propulseurs sont disposés sur la structure 20 du satellite 10. Un premier propulseur de forte puissance PSP, permettant d'assurer le transfert entre l'orbite terrestre initiale (après libération du lanceur) et l'orbite finale, est positionné sur la face anti-terre 23. Selon un état connu de la technique, un premier ensemble de propulseurs, comprenant par exemple deux propulseurs 32 et 33 positionnés en face Nord et en face Sud à proximité de la face anti-terre, est utilisé pour contrôler l'inclinaison. Un second ensemble de propulseurs, comme par exemple les propulseurs 34 et 35, positionné en faces Est et Ouest, est utilisé pour le contrôle de l'excentricité et la dérive. On sait aussi que le contrôle de l'inclinaison requiert de l'ordre de cinq à dix fois plus de carburant que le contrôle de l'excentricité et de la dérive. Pour cette raison, le contrôle en inclinaison est en général réalisé au moyen de propulseur à plasma, plus faiblement consommateur de carburant, tandis que les propulseurs dédiés au contrôle de l'excentricité et de la dérive sont le plus souvent à ergol chimique.

A titre d'exemple, un satellite courant de masse sèche 2500kg et permettant d'embarquer une charge utile de 900 kg, comprend un propulseur principal, deux propulseurs à plasma pour l'inclinaison et l'excentricité, et quatre propulseurs à ergol pour l'excentricité et la dérive. Typiquement, 1700kg d'ergol sont nécessaires pour le transfert initial d'orbite, et 220kg de Xenon sont nécessaires pour assurer le contrôle d'orbite du satellite pendant une durée de mission d'environ 15 ans. Ainsi, le coût et la masse des systèmes de propulsion actuels limitent la capacité à embarquer une charge utile élevée. Notons aussi que dans la plupart des systèmes connus de propulsion pour contrôle d'orbite, les différents propulseurs embarqués comprennent en réalité deux moteurs propulsifs positionnés côte à côte, pour des raisons de sécurité et de fiabilité de la mission. Cette redondance, bien connue de l'homme du métier, n'est pas représentée sur les figures mais on considère dans la suite qu'un propulseur peut être constitué d'un ou plusieurs moteurs propulsifs formant un ensemble propulsif, et dont la poussée qui peut être délivrée est identique, en orientation ou en intensité.

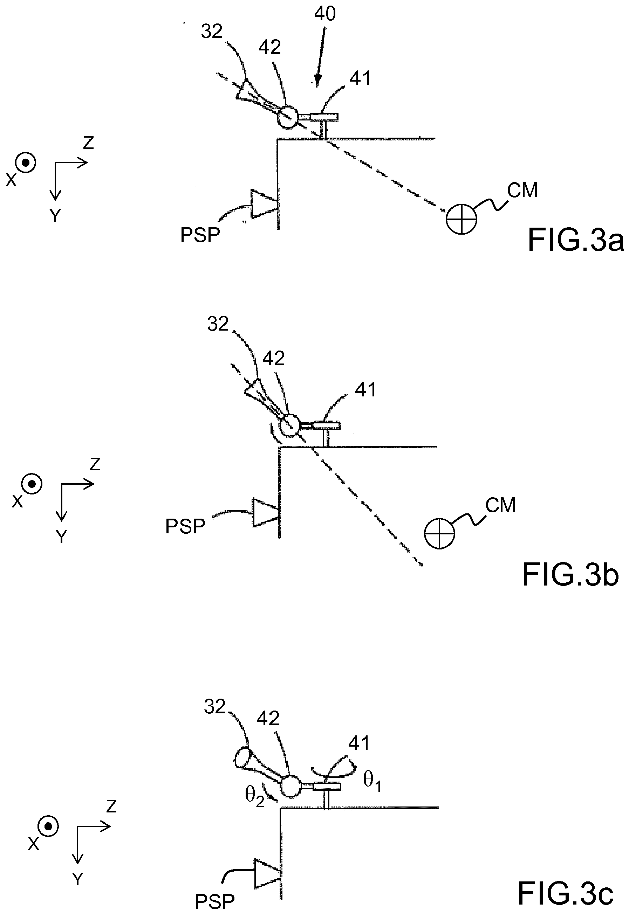

Les figures 3a, 3b et 3c illustrent le principe du contrôle d'orbite pour un satellite selon l'état connu de la technique. La structure 20 du satellite 10 est représentée en vue de coté, la face Est étant visible. Le propulseur 32 est relié à la face Nord de la structure 20 au moyen d'un mécanisme deux axes 40. Le mécanisme deux axes 40 permet la rotation du propulseur 32 par rapport à la structure 20 selon un premier axe parallèle à l'axe Y et un second axe parallèle à l'axe X. Sur les figures 3a à 3c, le mécanisme deux axes 40 est une liaison cardan réalisée au moyen d'une première liaison pivot 41 d'axe parallèle à l'axe Y et une seconde laison pivot 42 d'axe parallèle à l'axe X. Le centre de masse du satellite, situé à l'intérieur de la structure parallélépipédique 20, est référencé CM.

Sur la figure 3a, l'orientation du propulseur 32 permet de diriger la poussée du propulseur vers le centre de masse CM du satellite. Pour effectuer une manœuvre de correction d'inclinaison, une technique connue de l'homme du métier consiste à allumer le propulseur 32 une première fois à proximité d'un nœud orbital, par exemple 15, puis le propulseur du côté opposé une seconde fois à proximité du nœud orbital opposé, 16 dans l'exemple. Ainsi, la poussée du premier allumage du propulseur 32, orientée vers le centre de masse CM, déplace le satellite dans une direction ayant une composante en Z et une composante en Y. Douze heures après, la poussée du second allumage au nœud orbital opposé, déplace le satellite dans une direction ayant une composante en Z opposée au premier allumage, et qui vient en compenser l'effet non recherché sur l'excentricité et une composante également opposée en Y mais dont les effets recherchés en inclinaison se cumulent. Ainsi, deux allumages d'intensités égales réalisés à douze heures d'intervalle à proximité des nœuds orbitaux 15 et 16 permettent d'annuler l'effet de la composante radiale pour ne conserver qu'une correction Nord-Sud. Cette procédure connue permet une correction quotidienne de l'inclinaison.

Par cette même technique il est aussi possible, en appliquant une seconde poussée d'intensité différente de la première, d'appliquer des corrections d'excentricité selon un axe perpendiculaire à la ligne joignant les deux nœuds orbitaux 15 et 16. Des techniques ont aussi développées pour permettre des corrections d'excentricité selon un second axe, en décalant l'allumage du propulseur par rapport au nœud orbital, mais au prix d'une moins bonne efficacité du contrôle de l'inclinaison. En résumé, les systèmes connus permettent au moyen de deux systèmes de propulseur 32 et 33 d'assurer le contrôle de l'inclinaison et le contrôle de l'excentricité selon un axe sans désoptimisation du contrôle d'inclinaison, ou d'assurer le contrôle de l'inclinaison et le contrôle de l'excentricité selon deux axes avec désoptimisation du contrôle d'inclinaison. Le contrôle de la dérive ne peut être réalisé par ces deux propulseurs. Un satellite courant comprend pour cela quatre tuyères à ergol chimique positionnées sur les faces Est et Ouest du satellite.

Les systèmes de propulseur 32 et 33 sont également utiles pour gérer la quantité de mouvement des systèmes de contrôle d'attitude, comme illustré sur les figures 3b et 3c. En appliquant une poussée hors du centre de masse CM - dans un plan Y-Z sur la figure 3b et hors du plan Y-Z sur la figure 3c, on génère un couple de rotation sur le satellite - un couple de roulis sur la figure 3b et un couple de tangage et lacet sur la figure 3c. Ces deux couples peuvent être utilisés pour charger ou décharger les roues à inertie selon deux axes. Par exemple, lorsque la vitesse de rotation d'une roue à inertie atteint sa vitesse limite, on cherchera à orienter la poussée volontairement hors du centre de masse CM de façon a générer, en plus du déplacement souhaité du satellite, un couple permettant de désaturer la roue à inertie, ou plus généralement, le problème sera anticipé en ramenant le moment cinétique à des valeurs voulues à l'occasion de chaque maneuvre. Ces valeurs voulues pouvant bien entendu être nulles, mais aussi une valeur définie judicieusement de manière à anticiper l'évolution du moment cinétique entre deux maneuvres sous l'effet de la pression de radiation solaire notamment.

Notons aussi que le centre de masse du satellite varie au cours de la vie du satellite, notamment en raison de la consommation progressive du carburant embarqué. Dans les systèmes connus, des algorithmes sont mis en œuvre pour la gestion combinée du contrôle d'attitude et du contrôle d'orbite, et pour permettre de prendre en compte la position du centre de masse CM tout au long de la vie du satellite.

On comprend donc l'enjeu de pouvoir disposer de systèmes de propulsion efficaces. Les solutions actuelles, qui mettent en œuvre des propulseurs de nature différentes en divers emplacements du satellite sont relativement complexes, honéreuses et présentent une masse élevée qui limite la capacité d'embarquement du satellite.

Le document NL1032158C décrit toutes les caractéristiques du préambule de la revendication 1.

L'invention vise à proposer une solution alternative pour le contrôle de l'orbite et la réalisation des couples à exercer sur la satellite pendant les maneuvres en palliant les difficultés de mise en œuvre citées ci-dessus.

A cet effet, l'invention a pour objet un système de propulsion pour le contrôle d'orbite d'un satellite à orbite terrestre disposant d'une capacité d'accumulation de moment cinétique, et pour la génération de couples contribuant à maitriser le moment cinétique, ledit satellite étant animé d'une vitesse de déplacement tangentielle à l'orbite terrestre. Le système de propulsion comprend un propulseur apte à délivrer une force selon un axe F ayant une composante perpendiculaire à l'orbite, et un mécanisme motorisé relié d'une part au propulseur et d'autre part à une structure du satellite. Ledit mécanisme motorisé est apte à déplacer le propulseur selon un axe V parallèle à la vitesse du satellite, et apte à orienter le propulseur de manière à permettre de maitriser :
- une composante de la force selon l'axe V, pour le contrôle d'orbite,
- une amplitude et une direction de couple dans un plan perpendiculaire à l'axe F, pour la maitrise du moment cinétique.

Avantageusement, le mécanisme motorisé comprend plusieurs composants reliés entre eux, et positionnés en série entre la structure du satellite et le propulseur dans l'ordre suivant :
- une première liaison motorisée, permettant une rotation autour d'un axe sensiblement parallèle à l'axe V, et une rotation autour d'un axe sensiblement perpendiculaire à la fois à l'axe V et à l'axe F,
- un bras de déport rigide,
- un seconde liaison motorisée, permettant une rotation autour d'un axe sensiblement perpendiculaire à la fois à l'axe V et à l'axe F.

Avantageusement, le mécanisme motorisé comprend plusieurs composants reliés entre eux, et positionnés en série entre la structure du satellite et le propulseur dans l'ordre suivant :
- une première liaison motorisée, permettant une rotation autour d'un axe sensiblement perpendiculaire à la fois à l'axe V et à l'axe F.
- un bras de déport rigide,
- une seconde liaison motorisée, permettant une rotation autour d'un axe sensiblement parallèle à l'axe V, et une rotation autour d'un axe sensiblement perpendiculaire à la fois à l'axe V et à l'axe F.

Selon un autre mode de réalisation non revendiqué, le mécanisme motorisé comprend plusieurs composants reliés entre eux, et positionnés en série entre la structure du satellite et le propulseur dans l'ordre suivant :
- un dispositif motorisé, permettant de transmettre un mouvement de translation sensiblement selon l'axe V,
- une liaison motorisée, permettant une première rotation autour d'un axe sensiblement perpendiculaire à l'axe F, et une seconde rotation autour d'un axe sensiblement perpendiculaire à la fois à l'axe V et à l'axe F.

Avantageusement, la seconde liaison motorisée est reliée au propulseur par l'intermédiaire d'un second bras de déport.

Avantageusement, le mécanisme motorisé comprend des moyens d'alimentation en énergie de la structure du satellite vers le propulseur et/ou le mécanisme motorisé.

L'invention porte également sur un satellite à orbite terrestre muni d'un système de propulsion ayant les caractéristiques précédemment décrites, et comprenant une structure parallélépipédique. Le propulseur et le mécanisme motorisé sont maintenus, dans une configuration de stockage, contre une des faces de la structure du satellite ; le propulseur et le mécanisme motorisé étant libérés puis réorientés dans une configuration opérationnelle.

L'invention porte aussi sur un satellite à orbite terrestre muni d'un système de propulsion ayant les caractéristiques précédemment décrites et comprenant une structure parallélépipédique. La première liaison motorisée est fixée à proximité du milieu d'une arrête de la structure. Le bras de déport est maintenu en configuration de stockage contre une face adjacente à cette arrête et sensiblement parallèlement à cette arrête.

L'invention porte aussi sur un satellite à orbite terrestre muni d'un système de propulsion ayant les caractéristiques précédemment décrites et comprenant une structure parallélépipédique. La première liaison motorisée est fixée à proximité d'une arrête de la structure. Les deux bras de liaison sont maintenus en configuration de stockage contre une face adjacente à cette arrête et sensiblement parallèlement à cette arrête.

L'invention porte aussi sur un satellite à orbite géostationnaire muni d'un système de propulsion ayant les caractéristiques précédemment décrites, caractérisé en ce qu'un premier système de propulsion est fixé à la structure du satellite par un coté nord par rapport au plan de l'orbite, et en ce qu'un second système de propulsion est fixé à la structure du satellite par un coté sud par rapport au plan de l'orbite; l'allumage des systèmes de propulsion pour plusieurs positions du satellite sur l'orbite permettant le contrôle de six paramètres orbitaux du satellite.

L'invention porte enfin sur un satellite à orbite géostationnaire muni d'un système de propulsion ayant les caractéristiques précédemment décrites, caractérisé en ce qu'un premier système de propulsion est fixé à la structure du satellite par un coté nord ou sud par rapport au plan de l'orbite, et en ce qu'un second système de propulsion est fixé à la structure du satellite par un même côté que le premier système de propulsion ; l'allumage des systèmes de propulsion pour plusieurs positions du satellite sur l'orbite permettant le contrôle de six paramètres orbitaux du satellite.

L'invention sera mieux comprise et d'autres avantages apparaîtront à la lecture de la description détaillée des modes de réalisation donnés à titre d'exemple sur les figures suivantes.
La figure 1, déjà présentée, représente un satellite géostationnaire en orbite autour de la terre,
la figure 2, déjà présentée, représente une architecture courante d'un satellite comprenant une structure sur laquelle sont fixés divers dispositifs utiles au pilotage du satellite et à sa mission,
les figures 3a, 3b et 3c, déjà présentées, illustrent le principe du contrôle d'orbite pour un satellite selon l'état connu de la technique,
les figures 4a, 4b, 4c et 4d représentent quatre variantes d'un système de propulsion selon l'invention,
les figures 5a, 5b et 5c représentent un système de propulsion en configuration de stockage selon trois modes de réalisation de l'invention,
la figure 6 représente un satellite à orbite géostationnaire muni de systèmes de propulsion dans un premier mode de réalisation selon l'invention,
la figure 7 représente un satellite à orbite géostationnaire muni de systèmes de propulsion dans un second mode de réalisation selon l'invention,
les figures 8a, 8b et 8c représentent selon trois vues différentes, un satellite muni de systèmes de propulsion dans une mise en œuvre privilégiée de l'invention.

Par souci de clarté, les mêmes éléments porteront les mêmes repères dans les différentes figures.

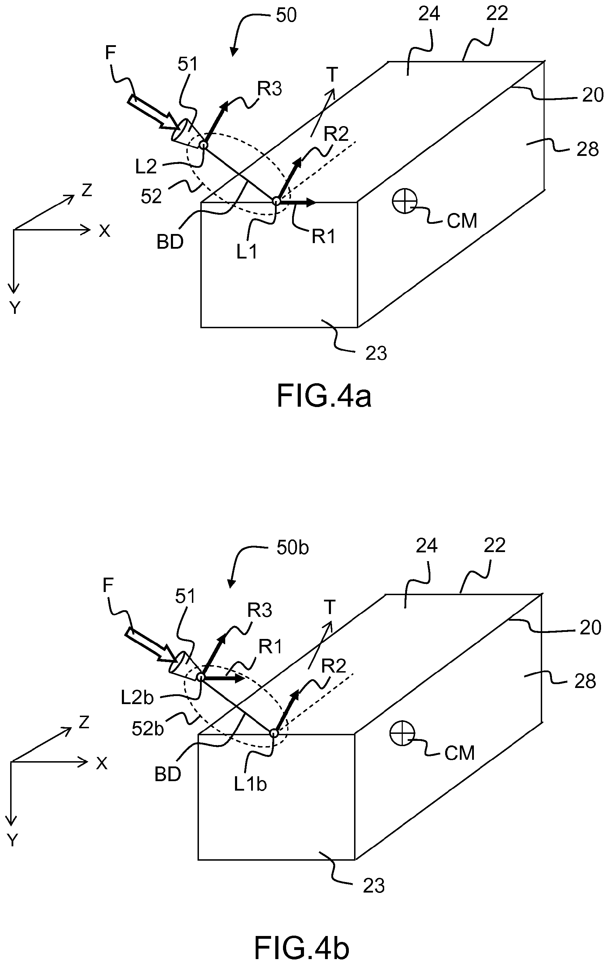

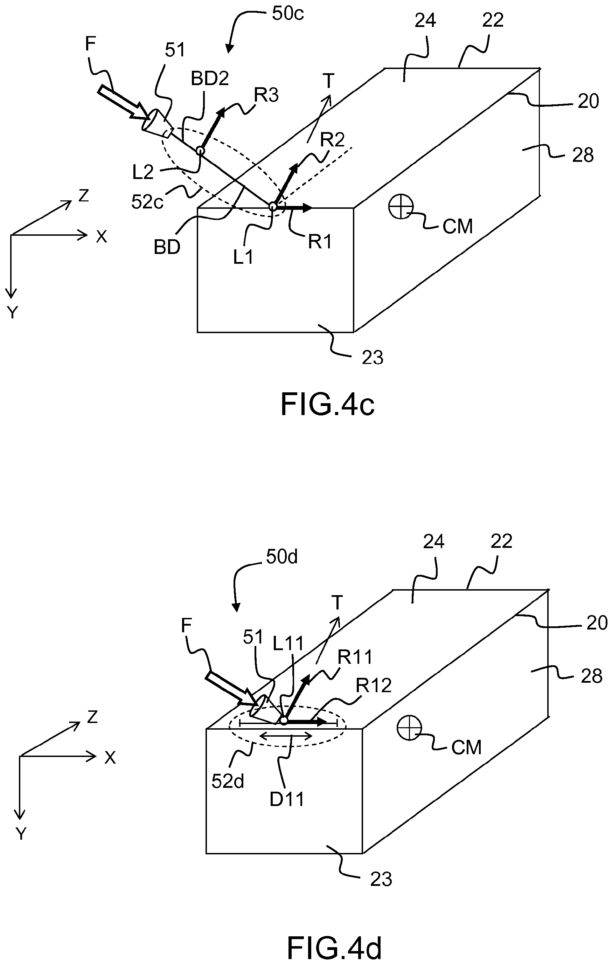

Les figures 4a, 4b, 4c et 4d représentent quatre variantes d'un système de propulsion selon l'invention. Comme précédemment décrit, un satellite 10 en orbite 11 est stabilisé sur trois axes d'un trièdre de référence lié au satellite au moyen d'un système de contrôle d'attitude. Le trièdre de référence comprend un axe Z orienté vers la terre, un axe Y perpendiculaire à l'obite et orienté dans le sens opposé au moment cinétique de la rotation orbitale, et un axe X formant avec les axes Y et Z un repère orthogonal direct. L'axe X se trouve orienté dans la direction de la vitesse du satellite en orbite 11 autour de la terre 12. Le satellite 10 comprend une structure parallélépipédique 20 dont deux faces 22 et 23, dites face terre et face anti-terre, sont perpendiculaires à l'axe Z et orientées respectivement vers la terre et vers une direction opposée à la terre, et deux faces adjacentes opposées 24 et 25, dite face nord et face sud, sont perpendiculaires à l'axe Y et orientées respectivement vers le nord et le sud dans le champ magnétique terrestre. On note aussi un centre de masse CM du satellite, dont la position varie légèrement au cours de la vie du satellite, est situé à l'intérieur de la structure 20.

Pour des raisons de clarté, la description de l'invention s'appuie sur le repère formé par les axes X, Y et Z et sur un satellite dont la structure 20 est parallélépipédique. L'invention ne se limite en aucune manière à un satellite dont la structure 20 est parallélépipédique, ni à un satellite stabilisé sur les trois axes X, Y et Z. Elle s'étend d'une manière générale à tout satellite 10 à orbite terrestre 11 disposant d'une capacité d'accumulation de moment cinétique, animé d'une vitesse de déplacement tangentielle à l'orbite terrestre 11. Dans la suite, l'axe de la vitesse est référencé axe V.

Dans une première variante de l'invention, telle que décrite par la figure **4a****,** un système de propulsion 50 comprend un propulseur 51 apte à délivrer une force selon un axe F ayant une composante perpendiculaire à l'orbite 11, c'est-à-dire selon l'axe Y sur la figure, et un mécanisme motorisé 52 relié d'une part au propulseur 51 et d'autre part à une structure 20 du satellite 10.

Avantageusement, le mécanisme motorisé 52 comprend plusieurs composants reliés entre eux, et positionnés en série entre la structure 20 du satellite 10 et le propulseur 51 dans l'ordre suivant :
- une première liaison motorisée L1, permettant une rotation autour d'un axe R1 sensiblement parallèle à l'axe V, c'est-à-dire parallèle à l'axe X sur la figure, et une rotation R2 autour d'un axe sensiblement perpendiculaire à la fois à l'axe V et à l'axe F,
- un bras de déport rigide BD,
- un seconde liaison motorisée L2, permettant une rotation autour d'un axe R3 sensiblement perpendiculaire à la fois à l'axe V et à l'axe F.

Dans une seconde variante de l'invention, telle que décrite par la figure **4b****,** un système de propulsion 50b comprend un propulseur 51 apte à délivrer une force selon un axe F ayant une composante perpendiculaire à l'orbite 11, c'est-à-dire selon l'axe Y sur la figure, et un mécanisme motorisé 52b relié d'une part au propulseur 51 et d'autre part à une structure 20 du satellite 10.

Avantageusement, le mécanisme motorisé 52b comprend plusieurs composants reliés entre eux, et positionnés en série entre la structure 20 du satellite 10 et le propulseur 51 dans l'ordre suivant :
- une première liaison motorisée L1b, permettant une rotation autour d'un axe R2 sensiblement perpendiculaire à la fois à l'axe V et à l'axe F.
- un bras de déport rigide BD,
- une seconde liaison motorisée L2b, permettant une rotation autour d'un axe R1 sensiblement parallèle à l'axe V, et une rotation autour d'un axe R3 sensiblement perpendiculaire à la fois à l'axe V et à l'axe F.

Dans une troisième variante de l'invention, telle que décrite par la figure **4c****,** un système de propulsion 50c comprend un propulseur 51 et un mécanisme motorisé 52c. Avantageusement, le mécanisme 52c comprend les mêmes composants que le mécanisme motorisé 52 ou 52b, décrits respectivement sur les figures 4a et 4b, et comprend en outre un second bras de déport BD2 reliant la seconde liaison motorisé, L2 ou L2b, et la structure 20 du satellite 10.

Les trois variantes représentées sur les figures 4a, 4b et 4c sont donc caractérisées par le fait que le mécanisme motorisé comprend :
- une première liaison motorisée, L1 ou L1b, permettant une rotation autour d'un axe R2 sensiblement perpendiculaire à la fois à l'axe V et à l'axe F,
- un bras de déport rigide BD,
- un seconde liaison motorisée, L2 ou L2b, permettant une rotation autour d'un axe R3 sensiblement perpendiculaire à la fois à l'axe V et à l'axe F ;
   et par le fait que la première liaison motorisée, L1 dans ce cas, ou la seconde liaison motorisé, L2 dans ce cas, permet en outre une rotation autour d'un axe R1 sensiblement parallèle à l'axe V.

Autrement dit, le système de propulsion comprend trois degrés de liberté en rotation, dont deux sont parallèles entre eux et séparés par un bras de déport. La disposition de ces deux axes de rotation parallèles entre eux et perpendiculaires à la fois à l'axe V et à l'axe F permet avantageusement, par des rotations d'amplitude égales et de directions opposées :
- de modifier le couple autour de la direction T perpendiculaire à F et à V, mais :
- de ne pas modifier la projection des forces en axes satellite, et
- de ne pas modifier le couple autour de V.

Ce découplage de l'un des axes de couple constitue un avantage substantiel pour le pilotage du mécanisme aux fins de résoudre le problème global visant à déterminer :
- les angles mécanismes et
- la durée d'application de la force,
permettant de réaliser à la fois :
- le positionnement du point d'application de la force,
- les orientation de la force et
- la durée d'application de la force qui conduiront aux incréments de vitesse voulus (intégrale de la force) et des variations de moment cinétique voulus.

Dans un mode de réalisation non revendiqué, tel que décrit par la figure **4d****,** un système de propulsion 50d comprend un propulseur 51 apte à délivrer une force selon un axe F ayant une composante perpendiculaire à l'orbite 11, et un mécanisme motorisé 52d relié d'une part au propulseur 51 et d'autre part à une structure 20 du satellite 10.

Avantageusement, le mécanisme motorisé 52d comprend plusieurs composants reliés entre eux, et positionnés en série entre la structure 20 du satellite 10 et le propulseur 51 dans l'ordre suivant :
- un dispositif motorisé D11, permettant de transmettre un mouvement de translation sensiblement selon l'axe V,
- une liaison motorisée L11, permettant une première rotation autour d'un axe R11 sensiblement perpendiculaire à l'axe F, et une seconde rotation autour d'un axe R12 sensiblement perpendiculaire à la fois à l'axe V et à l'axe R11.

Pour ces variantes de l'invention, divers mécanismes peuvent être mis en œuvre pour la réalisation des liaisons motorisés L1, L1b, L2, L2b, D11 ou L11. Une liste non exhaustive comprend en particulier des liaisons à cardan motorisé, ou mécanisme deux axes, des liaisons pivot motorisé. Les bras de déport BD et BD2 peuvent être de forme sensiblement longiligne comme représentée sur les figures 4a à 4c, ou peuvent comprendre une succession de plusieurs tiges sensiblement longilignes reliées entre elles par des coudes. Comme mentionné précédemment, un propulseur 51 peut aussi comprendre deux moteurs propulsifs pour des raisons de sécurité et de fiabilité.

Dans une phase opérationnelle du satellite, le satellite 10 étant en orbite 11 autour de la terre 12, le propulseur 51 relié au mécanisme motorisé 52, 52b, 52c ou 52d, selon l'une quelconque des quatre variantes de l'invention, peut être déplacé et orienté au moyen des liaisons motorisées. En particulier, Il est possible de positionner le propulseur 51 dans un plan perpendiculaire à l'axe X contenant le centre de masse CM, et d'orienter sa poussée vers le centre de masse CM. Dans cette configuration, le système de propulsion est fonctionnellement équivalent aux systèmes connus décrits par les figures 3a, 3b et 3c dans un cas parfait de connaissance du centre de masse et d'alignements ; en appliquant une poussée à proximité des nœuds orbitaux 15 et 16, il permet le contrôle de l'inclinaison et de l'excentricité selon un axe sans désoptimisation du contrôle d'inclinaison, ou le contrôle de l'inclinaison et de l'excentricité selon deux axes avec désoptimisation du contrôle d'inclinaison. Le mécanisme motorisé 52, 52b, 52c ou 52d permet aussi de positionner le propulseur 51 en dehors d'un plan perpendiculaire à l'axe X contenant le centre de masse CM, et d'orienter sa poussée vers le centre de masse CM. Dans cette configuration, le système de propulsion 50 permet d'appliquer une poussée sur le centre de masse CM ayant une composante désirée en X, c'est à dire selon la vitesse, en plus de composante en Y et/ou en Z. Cette caractéristique est particulièrement avantageuse car elle permet d'apporter au système de propulsion 50 la capacité de contrôle de l'orbite en dérive, ou autrement dit la capacité de corriger la position du satellite selon l'axe X, vers l'est ou vers l'ouest. De même, selon des techniques connus de l'homme du métier, le système de propulsion permet, en orientant la force du propulseur selon un axe ne passant pas par le centre de masse CM, de générer un couple pour le contrôle du moment cinétique du satellite.

Ainsi, en fonction de diverses contraintes, d'intégration sur le satellite, de coût, ou encore de masse, divers variantes du système de propulsion, notamment les quatre variantes décrites ci-dessus, peuvent être envisagés selon l'invention. Ces variantes du système de propulsion ont en commun un propulseur 51 apte à délivrer une force selon un axe F ayant une composante perpendiculaire à l'orbite 11, et un mécanisme motorisé, 52, 52b, 52c ou 52d, relié d'une part au propulseur 51 et d'autre part à une structure 20 du satellite 10, ledit mécanisme motorisé 52, 52b, 52c ou 52d étant apte à déplacer le propulseur 51 selon un axe V parallèle à la vitesse du satellite 10, et apte à orienter le propulseur 51 de manière à permettre de maitriser :
- une composante de la force selon l'axe V, pour le contrôle d'orbite,
- une amplitude et une direction de couple dans un plan perpendiculaire à l'axe F, pour la maitrise du moment cinétique.

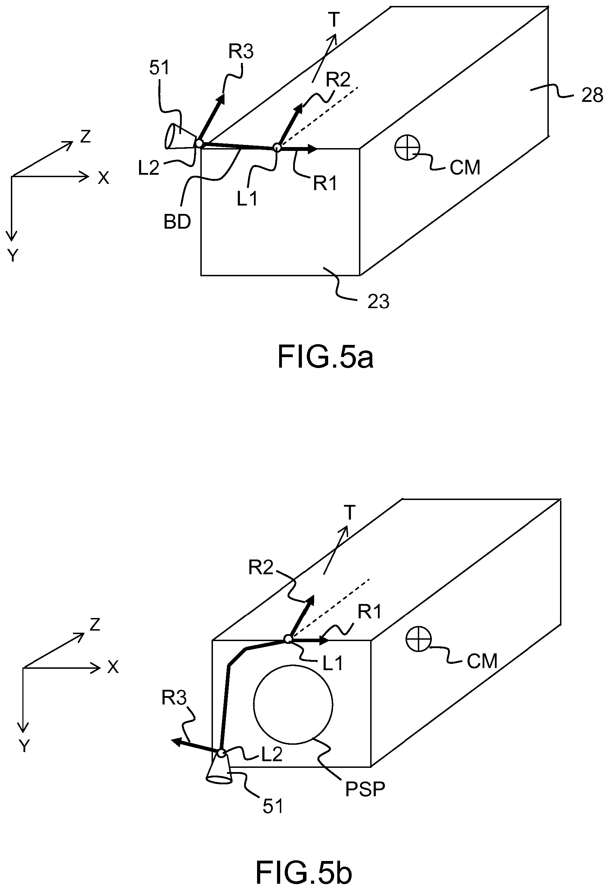

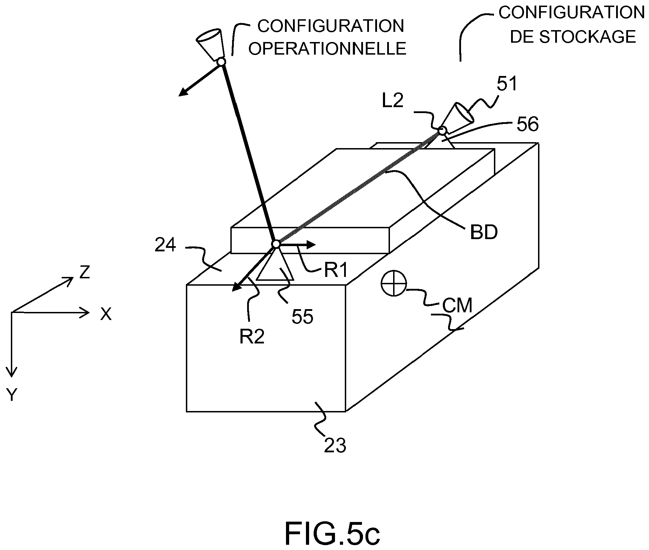

Les figures 5a, 5b et 5c représentent un système de propulsion en configuration de stockage selon trois modes de réalisation de l'invention. Un système de propulsion 50 est représenté sur les figures 5a à 5c, l'invention pourrait de la même manière s'appliquer à un système de propulsion 50b ou 50c pour les trois modes de réalisation de configuration de stockage.

Lors d'une phase de lancement par un engin spatial lanceur, le système de propulsion 50 est, dans une configuration de stockage, apte à maintenir le propulseur 51 et le mécanisme motorisé 52 contre une des faces de la structure 20 du satellite 10, pour le maintenir dans le volume limité par la coiffe du lanceur, et le protéger des fortes contraintes d'accélération et de vibration liées au lancement. Dans une phase opérationnelle ultérieure, le propulseur 51 et le mécanisme motorisé 52 sont libérés et positionnés en configuration opérationnelle, par exemple tels que représentés sur les figures 4a, 4b et 4c.

La figure 5a représente un système de propulsion 50 en configuration de stockage selon un premier mode de réalisation. Avantageusement, la première liaison motorisée L1 est fixée à proximité du milieu d'une arrête de la structure 20, et le bras de déport BD est maintenu en configuration de stockage contre une face adjacente à cette arrête et sensiblement parallèlement à cette arrête. Un bras de déport BD longiligne et de longueur sensiblement égale à la moitié de la longueur de l'arrête, permettant de maintenir la propulseur à proximité de la structure du satellite est mis en œuvre. Ce premier mode de réalisation permet avantageusement un stockage simple et peu encombrant du système de propulsion. Ce mode de réalisation peut aussi s'appliquer à un système de propulsion 50d, les bras de déport BD et BD2 étant repliés l'un contre l'autre et maintenus contre la structure du satellite. Avantageusement, la première liaison motorisée L1 est fixée à proximité d'une arrête de la structure 20, et les deux bras de liaison BD et BD2 sont maintenus en configuration de stockage contre une face adjacente à cette arrête et sensiblement parallèlement à cette arrête

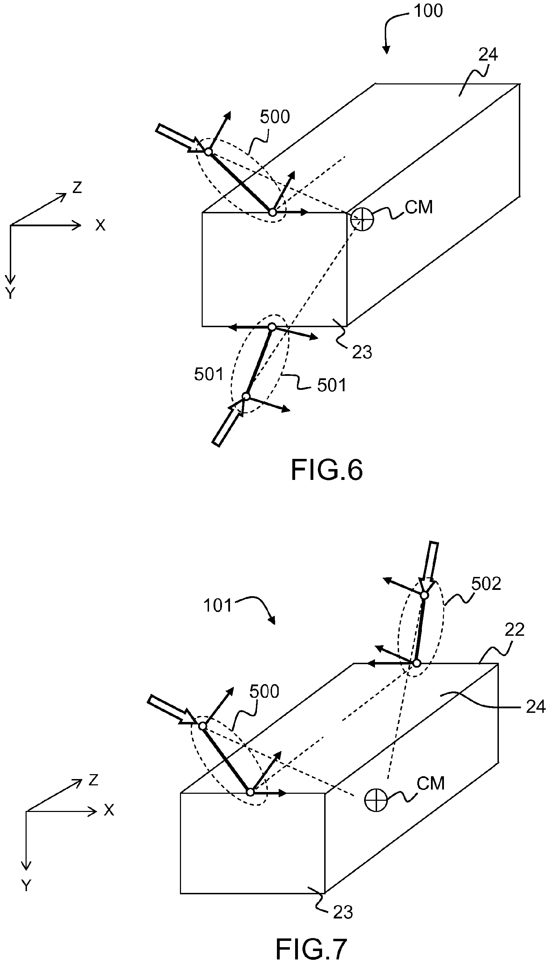

La figure 5b représente un système de propulsion 50 en configuration de stockage selon un second mode de réalisation. La première liaison motorisée L1 est fixée à proximité du milieu d'une arrête de la structure 20, et le bras de déport BD est maintenu en configuration de stockage contre une des faces adjacentes, en contournant au besoin les éléments qui ne peuvent être couverts au lancement, comme l'anneau d'interface avec le lanceur. Sur la figure 6b, la liaison L1 est fixée à proximité de l'arrête commune aux faces nord 24 et anti-terre 23, le bras de déport BD et le propulseur 51 sont maintenus contre la face anti-terre 23. Dans le but de limiter l'encombrement du système de propulsion 50 en configuration de stockage, et notamment permettre l'utilisation d'un propulseur principal PSP positionné au centre de la face anti-terre, un bras de déport coudé est mis en œuvre. Ce second mode de réalisation améliore l'efficacité du contrôle d'inclinaison, en permettant le stockage d'un bras de déport de plus grande dimension que dans la première variante.

La figure 5c représente un système de propulsion 50 selon un troisième mode de réalisation. Pour une meilleure compréhension, le système de propulsion est représenté en configuration de stockage et en configuration opérationnelle. La première liaison motorisée L1 est fixée à proximité d'une arrête de la structure 20, et le bras de déport BD est maintenu en configuration de stockage contre la face nord 24 ou la face sud 25. Dans une architecture courante de satellite, les panneaux solaires 26 et 27 sont, en configuration de stockage, repliés et maintenus respectivement contre les faces nord 24 et sud 25. Sur la figure, le système de propulsion, fixé sur la face nord 24 à proximité de la face anti-terre 23 sur la figure, est maintenu en configuration de stockage au moyen de deux supports 55 et 56 fixés sur la face de nord 24, de part et d'autre des panneaux solaires 26 repliés contre la face nord 24 ; les deux supports 55 et 56 étant configurés de sorte à intercaler, en configuration de stockage, les panneaux solaires 26 entre la face nord 24 de la structure 20 et le bras de déport BD du système de propulsion. Ce troisième mode de réalisation améliore encore l'efficacité du contrôle d'inclinaison, en permettant le stockage d'un bras de déport de grande dimension apte à positionner et orienter le propulseur de façon à délivrer une poussée sur le centre de masse CM dont la composante selon l'axe Y est très supérieure aux composantes selon les axes X et Z.

Divers dispositifs de maintien du système de propulsion en configuration de stockage sont envisagés selon l'invention ; en particulier des dispositifs pyrotechniques sont envisagés.

Avantageusement, le mécanisme motorisé 52 du système de propulsion 50 selon l'invention comprend des canalisations pour l'alimentation en carburant de la structure 20 du satellite 10 vers le propulseur 51, et/ou des moyens des moyens d'alimentation en énergie électrique vers le propulseur 51 et le mécanisme motorisé 52. Le propulseur 51 peut être de type chimique ou de type électrique. Pour un propulseur chimique, les canalisations transportent un carburant chimique de type ergol ou propergol ; pour un propulseur électrique, les canalisations transportent un carburant de type Xenon ou Krypton.

L'invention porte aussi sur un satellite à orbite terrestre, et plus particulièrement géostationnaire, muni d'un système de propulsion ayant les caractéristiques précédemment décrites.

La figure 6 représente un satellite à orbite géostationnaire muni de systèmes de propulsion dans un premier mode de réalisation selon l'invention. Un satellite 100 comprend un premier système de propulsion 500 fixé à la structure 20 du satellite 100 par un coté nord par rapport au plan de l'orbite 11, et un second système de propulsion 501 fixé à la structure 20 du satellite 100 par un coté sud par rapport au plan de l'orbite 1. L'allumage des systèmes de propulsion 500 et 501 pour plusieurs positions du satellite 100 sur l'orbite 11 permet le contrôle des six paramètres orbitaux du satellite 100. Dans le cas particulier d'un satellite géostationnaire ayant une structure parallélépipédique comme représenté sur la figure 6, le premier système de propulsion 500 peut être avantageusement fixé à la structure 20 sur la face nord 24 et à proximité de la face anti-terre 23, et le second système de propulsion 501 peut être fixé à la structure 20 sur la face sud 25 et à proximité de la face anti-terre 23.

Les deux systèmes de propulsion 500 et 501 ainsi configurés permettent un contrôle total d'orbite. L'allumage successif des systèmes de propulsion 500 et 501 pour plusieurs positions du satellite sur l'orbite permet de contrôler l'inclinaison et l'excentricité selon un axe par des poussées dans un plan Y-Z aux noeuds orbitaux, et de contrôler la dérive et l'excentricité selon un second axe par des poussées hors d'un plan Y-Z réalisées au moyen des deux systèmes de propulsion 500 et 501 selon l'invention. Ces techniques de contrôle d'orbite sont connues de l'homme du métier et ne sont pas décrites en détail ici. Nous rappellerons simplement la technique classique de deux maneuvres séparées d'une demi orbite dont les composantes radiales se compensent, ou la possibilité, notamment en cas de panne d'un des deux systèmes, de n'utiliser que celui restant à des endroits adaptés de l'orbite pour continuer à réaliser le contrôle total de l'orbite, au prix d'une désoptimisation de l'efficacité des maneuvres, et donc de la durée de vie résiduelle du satellite en termes de carburant.

Cette première mise en œuvre selon l'invention est particulièrement avantageuse car elle permet, au moyen de deux systèmes de propulsion seulement, un contrôle total d'orbite ainsi qu' une capacité en couple pour le contrôle du moment cinétique. Ainsi, des propulseurs dédiées au contrôle de la dérive couramment mis en œuvre dans l'état connu de la technique, tels que les propulseurs 34 et 35 de la figure 2, généralement de type chimiques, ne sont pas nécessaires. La mise en œuvre des deux systèmes de propulsion 500 et 501, de préférence de type électrique, permet ainsi de simplifier l'architecture globale du satellite et de réduire le besoin en carburant. Sur un satellite d'architecture courante, cela représente un gain moyen pouvant atteindre 100kg d'ergols chimiques en plus des gains économiques liés à la suppression de quatre tuyères chimiques, ou plus généralement, dans le cas de systèmes combinant la réalisation des forces tangentielles avec d'autres fonctions, il permet la simplification et/ou l'optimisation du système propulsif initial .

Avantageusement, les systèmes de propulsion 500 et 501 peuvent en outre être utilisés pour le transfert de l'orbite initiale (après libération du lanceur) vers l'orbite cible. Dans une configuration adaptée au transfert d'orbite, les deux systèmes de propulsion 500 et 501 sont positionnés et orientés de manière à ce que les forces délivrées par les propulseurs de chacun des deux systèmes de propulsion 500 et 501 génèrent une poussée sur le satellite selon une direction voulue et un couple maitrisé ; la génération de couple ayant pour but d'aider au contrôle d'attitude du satellite ou à la maitrise du moment cinétique du satellite. Autrement dit, les forces de chaque système agissent essentiellement selon la direction de l'incrément de vitesse souhaité, et le couple total des deux systèmes est ajustable à zéro selon les trois axes, ou à des valeurs permettant de faire évoluer tel que nécessaire l'attitude du satellite ou le moment cinétique embarqué.

Avantageusement, l'allumage simultané des systèmes de propulsion 500 et 501 ainsi configurés permet de délivrer une poussée parallèlement à l'axe Z, autrement dit à couple nul. Les systèmes de propulsion 500 et 501 selon l'invention permettent d'assister, au moins sur une portion du transfert d'orbite, un propulseur principal PSP plus consommateur. Dans une variante encore plus avantageuse, les systèmes de propulsion 500 et 501 selon l'invention permettent seuls le transfert d'orbite, sans l'assistance d'un propulseur principal PSP.

La figure 7 représente un satellite à orbite géostationnaire muni de systèmes de propulsion dans un second mode de réalisation selon l'invention. Un satellite 101 comprend un premier système de propulsion 500 fixé à la structure 20 du satellite 101 par un coté nord ou sud par rapport au plan de l'orbite 11, et un second système de propulsion 502 fixé à la structure 20 par un même côté que le premier système de propulsion 500. L'allumage des systèmes de propulsion 500 et 502 pour plusieurs positions du satellite 101 sur l'orbite 11 permet le contrôle des six paramètres orbitaux du satellite. Dans le cas particulier d'un satellite géostationnaire ayant une structure parallélépipédique comme représenté sur la figure 7, le premier système de propulsion 500 peut être fixé à la structure 20 sur la face nord 24 et à proximité de la face anti-terre 23, et le second système de propulsion 502 peut être fixé à la structure 20 sur la face nord 24 et à proximité de la face terre 22.

Les deux systèmes de propulsion 500 et 502 ainsi configurés permettent un contrôle total d'orbite. Selon une technique connue de l'homme du métier, une correction d'inclinaison est possible par allumage simultané des systèmes de propulstion 500 et 502, de façon à annuler, instantanément dans ce mode de réalisation, les composantes en Z des deux poussées. Pour une correction vers le sud, un allumage simultané est réalisé à proximité du nœud orbital dit ascendant, c'est à dire lorsque la trajectoire d'orbite traverse le plan équatorial du sud vers le nord ; pour un aménagement sur la face sud, un allumage simultané est réalisé à proximité du nœud orbital dit descendant, c'est à dire lorsque la trajectoire d'orbite traverse le plan équatorial du nord vers le sud. Selon un principe similaire à celui décrit pour la figure 6, le contrôle de l'excentricité et la dérive est possible par des poussées hors d'un plan Y-Z réalisées au moyen des deux systèmes de propulsion selon l'invention, soit aux noeuds pour une efficacité optimale du contrôle d'inclinaison, soit en décalage de ces noeuds pour un compromis optimal du contrôle de l'ensemble des paramètres orbitaux. Ces techniques de contrôle d'orbite sont connues de l'homme du métier et ne sont pas décrites plus en détail ici.

Cette seconde mise en œuvre selon l'invention est particulièrement avantageuse car elle permet de libérer l'une des faces nord ou sud de l'encombrement des systèmes de propulsion. En outre l'utilisation conjointe des deux systèmes lève l'obligation d'une poussée orientée vers le voisinage du centre de masse pour qu'il en résulte un couple nul ou d'amplitude assez faible pour être compatible de la gestion du moment cinétique. Il devient alors possible de donner encore davantage d'efficacité aux propulseurs dans la direction perpendiculaire à l'orbite, en rapprochant leur orientation de poussée de cet axe, tel qu'illustré en figure 7.

Avantageusement, les propulseurs de chacun des systèmes de propulsion 500 et 502 sont orientés de façon à délivrer une force selon un axe ne passant pas par un centre de masse CM du satellite, et l'allumage simultané des propulseurs est apte à générer un couple nul.

Avantageusement, les propulseurs de chacun des systèmes de propulsion 500 et 502 sont orientés de façon à délivrer une force selon un axe ne passant pas par un centre de masse CM du satellite dans le but de générer une poussée ayant une composante importante selon l'axe perpendiculaire à l'orbite.

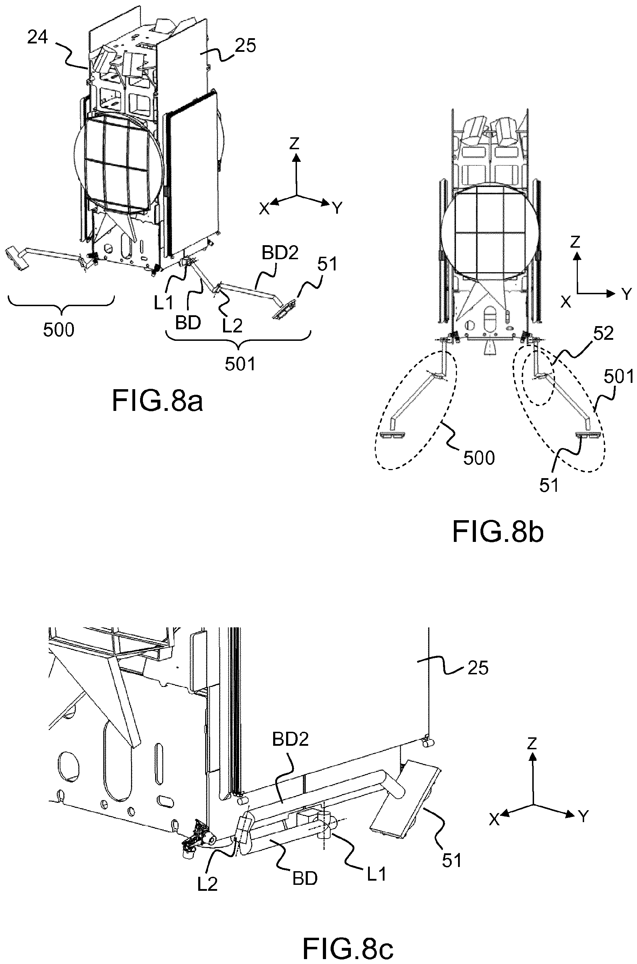

A titre d'exemple, les figures 8a, 8b et 8c représentent selon trois vues différentes, un satellite muni de systèmes de propulsion dans une mise en œuvre privilégiée de l'invention. Un satellite 100 est muni de deux systèmes de propulsion 500 et 501 fixés respectivement sur les faces nord et sud 24 et 25, à proximité de la face anti-terre 23. Selon l'invention, les systèmes de propulstion 500 et 501 comprennent un propulseur 51 et un mécanisme motorisé 52 comprenant une liaison motorisé L1, un bras de déport BD, une liaison motorisé L2 et un second bras de déport BD2 reliant le mécanisme 52 au propulseur 51.

La figure 8a représente les systèmes de propulsion 500 et 501 en configuration opérationnelle, adaptée au contrôle d'orbite. La figure 8b représente les systèmes de propulsion dans une configuration adaptée au transfert d'orbite. La figure 8c représente les systèmes de propulsion en configuration de stockage.

## Revendications

1. Système de propulsion pour le contrôle d'orbite d'un satellite (10) à orbite terrestre (11) disposant d'une capacité d'accumulation de moment cinétique, et pour la génération de couples contribuant à maitriser le moment cinétique, ledit satellite étant animé d'une vitesse de déplacement tangentielle à l'orbite terrestre (11),
le système de propulsion (50) comprenant un propulseur (51) apte à délivrer une force selon un axe F ayant une composante perpendiculaire à l'orbite (11), et un mécanisme motorisé (52 ; 52b ; 52c ; 52d) relié d'une part au propulseur (51) et apte à être relié d'autre part à une structure (20) du satellite (10),
le mécanisme motorisé (52 ; 52b, 52c) comprenant :
.- une première liaison motorisée (L1 ; L1b), apte à être connectée à la structure du satellite et configurée pour permettre une rotation autour d'un axe (R2) sensiblement perpendiculaire à la fois à un axe V parallèle à la vitesse du satellite (10) et à l'axe F,
.- un premier bras de déport rigide (BD),
.- une seconde liaison motorisée (L2 ; L2b), configurée pour permettre une rotation autour d'un axe (R3) sensiblement perpendiculaire à la fois à l'axe V et à l'axe F ;
la première liaison motorisée (L1 ; L1b), le premier bras de déport rigide (BD), et la seconde liaison motorisée étant connectés et positionnés en série depuis la première liaison motorisée (L1 ; L1b) jusqu'à la seconde liaison motorisée (L2 ; L2b),
la première liaison motorisée (L1) ou la seconde liaison motorisée (L2) étant configurée pour permettre une rotation autour d'un axe (R1) sensiblement parallèle à l'axe V ;
le système de propulsion étant **caractérisé en ce que** :
.- le mécanisme motorisé consiste en trois degrés de liberté en rotation, deux des trois degrés de liberté étant mutuellement parallèles et séparés par le premier bras de déport rigide (BD), et
.- le mécanisme motorisé (52 ; 52b ; 52c) est configuré pour déplacer le propulseur (51) selon l'axe V, et orienter le propulseur (51) de manière à permettre de maitriser:
- une composante de la force selon l'axe V, pour le contrôle d'orbite,
- une amplitude et une direction de couple dans un plan perpendiculaire à l'axe F, pour la maitrise du moment cinétique.

2. Système de propulsion selon la revendication 1, comprenant en outre un second bras de déport (BD2) connecté entre la seconde liaison motorisée (L2 ; L2b) et le propulseur (51).

3. Système de propulsion selon l'une des revendications précédentes, **caractérisé en ce que** le mécanisme motorisé (52 ; 52b ; 52c) comprend des moyens d'alimentation en énergie de la structure (20) du satellite (10) vers le propulseur (51) et/ou le mécanisme motorisé (52 ; 52b ; 52c).

4. Satellite à orbite terrestre muni d'un système de propulsion selon l'une des revendications 1 à 3, **caractérisé en ce qu'**il comprend une structure parallélépipédique (20), et **en ce que** le propulseur (51) et le mécanisme motorisé (52 ; 52b ; 52c) sont maintenus, dans une configuration de stockage, contre une des faces de la structure (20) du satellite (10); le propulseur (51) et le mécanisme motorisé (52 ; 52b ; 52c) étant libérés puis réorientés dans une configuration opérationnelle.

5. Satellite à orbite terrestre muni d'un système de propulsion selon l'une des revendications 1 à 4, **caractérisé en ce qu'**il comprend une structure parallélépipédique (20), et **en ce que** la première liaison motorisée (L1 ; L1b) est fixée à proximité du milieu d'une arrête de la structure (20), et **en ce que** le bras de déport (BD) est maintenu en configuration de stockage contre une face adjacente à cette arrête et sensiblement parallèlement à cette arrête.

6. Satellite à orbite terrestre muni d'un système de propulsion selon la revendication 2, **caractérisé en ce qu'**il comprend une structure parallélépipédique (20), et **en ce que** la première liaison motorisée (L1 ; L1b) est fixée à proximité d'une arrête de la structure (20), et **en ce que** le premier bras de déport rigide (BD) et le second bras de déport (BD2) sont maintenus en configuration de stockage contre une face adjacente à cette arrête et sensiblement parallèlement à cette arrête.

7. Satellite à orbite géostationnaire muni d'un système de propulsion selon l'une des revendications 1 à 3, **caractérisé en ce qu'**un premier système de propulsion (500) est fixé à la structure (20) du satellite (100) par un coté nord par rapport au plan de l'orbite (11), et **en ce qu'**un second système de propulsion (501) est fixé à la structure (20) du satellite (100) par un coté sud par rapport au plan de l'orbite (11); l'allumage des systèmes de propulsion (500, 501) pour plusieurs positions du satellite (100) sur l'orbite (11) permettant le contrôle de six paramètres orbitaux du satellite (100).

8. Satellite à orbite géostationnaire selon la revendication 7, **caractérisé en ce que** les deux systèmes de propulsion (500, 501) sont, dans une configuration adaptée au transfert d'orbite, positionnés et orientés de manière à ce que les forces délivrées par les propulseurs de chacun des deux systèmes de propulsion (500, 501) génèrent une poussée sur le satellite selon une direction voulue et un couple maitrisé ; la génération de couple ayant pour but d'aider au contrôle d'attitude du satellite ou à la maitrise du moment cinétique du satellite.

9. Satellite à orbite geostationnaire muni d'un système de propulsion selon l'une des revendications 1 à 3, **caractérisé en ce qu'**un premier système de propulsion (500) est fixé à la structure (20) du satellite (101) par un coté nord ou sud par rapport au plan de l'orbite (11), et **en ce qu'**un second système de propulsion (502) est fixé à la structure (20) du satellite (101) par un même côté que le premier système de propulsion (500); l'allumage des systèmes de propulsion (500, 502) pour plusieurs positions du satellite (101) sur l'orbite (11) permettant le contrôle de six paramètres orbitaux du satellite.

10. Satellite à orbite geostationnaire selon la revendication 9, **caractérisé en ce que** les propulseurs de chacun des systèmes de propulsion (500, 502) sont orientés de façon à délivrer une force selon un axe ne passant pas par un centre de masse (CM) du satellite, et **en ce que** l'allumage simultané des propulseurs est apte à générer un couple nul.

11. Satellite à orbite terrestre selon la revendication 9 ou 10, caractérisé en ce en ce que les propulseurs de chacun des systèmes de propulsion (500, 502) sont orientés de façon à délivrer une force selon un axe ne passant pas par un centre de masse (CM) du satellite dans le but de générer une poussée ayant une composante importante selon l'axe perpendiculaire à l'orbite.

## Patentansprüche

1. Antriebssystem für die Steuerung der Umlaufbahn eines Satelliten (10) mit Erdumlaufbahn (11), welches über eine Kapazität zur Speicherung des kinetischen Moments verfügt, und zur Erzeugung von Momenten, welche dazu beitragen, das kinetische Moment zu lenken, wobei sich der Satellit mit einer Bewegungsgeschwindigkeit tangential zur Erdumlaufbahn (11) bewegt, wobei das Antriebssystem (50) ein Triebwerk (51) umfasst, welches in der Lage ist, eine Kraft entlang einer Achse F abzugeben, welche eine zur Umlaufbahn (11) rechtwinklige Komponente aufweist, und einen motorisierten Mechanismus (52; 52b; 52c; 52d), welcher einerseits mit dem Triebwerk (51) verbunden und in der Lage ist, andererseits mit einer Struktur (20) des Satelliten (10) verbunden zu werden, wobei der motorisierte Mechanismus (52; 52b, 52c) Folgendes umfasst:
- eine erste motorisierte Verbindung (L1; L1b), welche in der Lage ist, mit der Struktur des Satelliten verbunden zu werden und konfiguriert ist, um eine Drehung um eine Achse (R2) zu ermöglichen, welche im Wesentlichen rechtwinklig gleichermaßen zu einer Achse V, welche parallel zu der Geschwindigkeit des Satelliten (10) ist, und zu der Achse F ist,
- einen ersten starren Auslegerarm (BD),
- eine zweite motorisierte Verbindung (L2; L2b), welche konfiguriert ist, um eine Drehung um eine Achse (R3) zu ermöglichen, welche im Wesentlichen rechtwinklig gleichermaßen zu der Achse V und der Achse F ist;
wobei die erste motorisierte Verbindung (L1; L1b), der erste starre Auslegerarm (BD) und die zweite motorisierte Verbindung ab der ersten motorisierten Verbindung (L1; L1b) bis zur zweiten motorisierten Verbindung (L2 ; L2b) in Reihe verbunden und positioniert sind,
wobei die erste motorisierte Verbindung (L1) oder die zweite motorisierte Verbindung (L2) konfiguriert ist, um eine Drehung um eine Achse (R1) zu ermöglichen, welche im Wesentlichen parallel zu der Achse V ist;
wobei das Antriebssystem **dadurch gekennzeichnet ist, dass**:
- der motorisierte Mechanismus aus drei Freiheitsgraden in Rotation besteht, wobei zwei der drei Freiheitsgrade zueinander parallel und durch den ersten starren Auslegerarm (BD) getrennt sind, und
- der motorisierte Mechanismus (52; 52b; 52c) konfiguriert ist, um das Triebwerk (51) entlang der Achse V zu verschieben und das Triebwerk (51) so auszurichten, dass Folgendes gelenkt werden kann:
- eine Komponente der Kraft entlang der Achse V, für die Steuerung der Umlaufbahn,
- eine Amplitude und eine Richtung des Moments in einer zur Achse F rechtwinkligen Ebene, zur Lenkung des kinetischen Moments.

2. Antriebssystem nach Anspruch 1, ferner umfassend einen zweiten Auslegerarm (BD2), welcher zwischen der zweiten motorisierten Verbindung (L2; L2b) und dem Triebwerk (51) verbunden ist.

3. Antriebssystem nach einem der vorhergehenden Ansprüche, **dadurch gekennzeichnet, dass** der motorisierte Mechanismus (52; 52b; 52c) Energieversorgungsmittel von der Struktur (20) des Satelliten (10) zum Triebwerk (51) und/oder zum motorisierten Mechanismus (52; 52b; 52c) umfasst.

4. Satellit mit Erdumlaufbahn mit einem Antriebssystem nach einem der Ansprüche 1 bis 3, **dadurch gekennzeichnet, dass** er eine quaderförmige Struktur (20) umfasst und dadurch, dass das Triebwerk (51) und der motorisierte Mechanismus (52; 52b; 52c) in einer Verstauungskonfiguration an einer der Seiten der Struktur (20) des Satelliten (10) gehalten werden; wobei das Triebwerk (51) und der motorisierte Mechanismus (52; 52b; 52c) freigegeben und dann in eine Betriebskonfiguration neu ausgerichtet werden.

5. Satellit mit Erdumlaufbahn mit einem Antriebssystem nach einem der Ansprüche 1 bis 4, **dadurch gekennzeichnet, dass** er eine Quaderstruktur (20) umfasst, und dadurch, dass die erste motorisierte Verbindung (L1; L1b) in der Nähe der Mitte einer Kante der Struktur (20) befestigt ist und dadurch, dass der Auslegerarm (BD) in der Verstauungskonfiguration an einer an die Kante angrenzenden und im Wesentlichen zu dieser Kante parallelen Seite gehalten wird.

6. Satellit mit Erdumlaufbahn mit einem Antriebssystem nach Anspruch 2, **dadurch gekennzeichnet, dass** er eine Quaderstruktur (20) umfasst, und dadurch, dass die erste motorisierte Verbindung (L1; L1b) in der Nähe einer Kante der Struktur (20) befestigt ist und dadurch, dass der erste starre Auslegerarm (BD) und der zweite Auslegerarm (BD2) in der Verstauungskonfiguration an einer an diese Kante angrenzenden und im Wesentlichen zu dieser Kante parallelen Seite gehalten werden.

7. Satellit mit geostationärer Umlaufbahn und mit einem Antriebssystem nach einem der Ansprüche 1 bis 3, **dadurch gekennzeichnet, dass** ein erstes Antriebssystem (500) an der Struktur (20) des Satelliten (100) mit einer Nordseite in Bezug auf die Ebene der Umlaufbahn (11) befestigt ist, und dadurch, dass ein zweites Antriebssystem (501) an der Struktur (20) des Satelliten (100) mit einer Südseite in Bezug auf die Ebene der Umlaufbahn (11) befestigt ist; wobei die Zündung der Antriebssysteme (500, 501) für mehrere Positionen des Satelliten (100) auf der Umlaufbahn (11) die Steuerung von sechs Umlaufbahnparametern des Satelliten (100) ermöglicht.

8. Satellit mit geostationärer Umlaufbahn nach Anspruch 7, **dadurch gekennzeichnet, dass** die beiden Antriebssysteme (500, 501), in einer für den Umlaufbahntransfer geeigneten Konfiguration, so positioniert und ausgerichtet sind, dass die von den Triebwerken eines jeden der beiden Antriebssysteme (500, 501) abgegebenen Kräfte einen Schub auf den Satelliten entlang einer gewünschten Richtung und mit einem gelenkten Moment erzeugen; wobei die Erzeugung des Moments dazu dient, die Lagesteuerung oder die Lenkung des kinetischen Moments des Satelliten zu unterstützen.

9. Satellit mit geostationärer Umlaufbahn und mit einem Antriebssystem nach einem der Ansprüche 1 bis 3, **dadurch gekennzeichnet, dass** ein erstes Antriebssystem (500) an der Struktur (20) des Satelliten (101) mit einer Nord- oder Südseite in Bezug auf die Ebene der Umlaufbahn (11) befestigt ist, und dadurch, dass ein zweites Antriebssystem (502) an der Struktur (20) des Satelliten (101) mit einer gleichen Seite wie das erste Antriebssystem (500) befestigt ist; wobei die Zündung der Antriebssysteme (500, 502) für mehrere Positionen des Satelliten (101) auf der Umlaufbahn (11) die Steuerung der sechs Umlaufbahnparameter des Satelliten ermöglicht.

10. Satellit mit geostationärer Umlaufbahn nach Anspruch 9, **dadurch gekennzeichnet, dass** die Triebwerke eines jeden der Antriebssysteme (500, 502) so ausgerichtet sind, dass sie eine Kraft entlang einer Achse abgeben, welche nicht den Gewichtsmittelpunkt (CM) des Satelliten durchquert, und dadurch, dass die gleichzeitige Zündung der Triebwerke in der Lage ist, ein Moment gleich null zu erzeugen.

11. Satellit mit Erdumlaufbahn nach Anspruch 9 oder 10, **dadurch gekennzeichnet, dass** die Triebwerke eines jeden der Antriebssysteme (500, 502) so ausgerichtet sind, dass sie eine Kraft entlang einer Achse abgeben, welche nicht den Gewichtsmittelpunkt (CM) des Satelliten durchquert, mit dem Ziel, einen Schub zu erzeugen, welcher eine bedeutende Komponente entlang der zur Umlaufbahn rechtwinkligen Achse aufweist.

## Claims

1. Propulsion system for controlling the orbit of a satellite (10) in earth orbit (11) having an angular momentum accumulation capacity, and for generating torque assisting the control of the angular momentum, said satellite being driven at a travelling speed tangential to the earth orbit (11), the propulsion system (50) comprising:
- a propulsion unit (51) capable of delivering a force along an axis F having a component perpendicular to the orbit (11), and a motorised mechanism (52; 52b; 52c; 52d) connected, on the one hand, to the propulsion unit (51) and capable of being connected, on the other hand, to a structure (20) of the satellite (10),
the motorised mechanism (52; 52b; 52c) comprising:
- a first motorised link (L1; L1b) capable of being connected to the structure of the satellite and configured to allow rotation about an axis (R2) substantially perpendicular both to a parallel axis V of the speed of the satellite and to the axis F;
- a first rigid offset arm (BD);
- a second motorised link (L2; L2b) configured to allow rotation about an axis (R3) substantially perpendicular both to the axis V and to the axis F;
the first motorised link (L1; L1b), the first rigid offset arm (BD) and the second motorised link being connected and positioned in series from the first motorised link (L1; L1b) to the second motorised link (L2; L2b);
the first motorised link (L1) or the second motorised link (L2) being configured to allow rotation about an axis (R1) substantially parallel to the axis V;
the propulsion system being **characterised in that**:
- the motorised mechanism has three degrees of rotational freedom, with two of the three degrees of freedom being mutually parallel and separated by the first rigid offset arm (BD); and
- the motorised mechanism (52; 52b; 52c) is configured to move the propulsion unit (51) along the axis V and to orient the propulsion unit (51) in order to be able to control:
- a component of the force along the axis V, for controlling the orbit;
- an amplitude and a torque direction in a plane perpendicular to the axis F, for controlling the angular momentum.

2. Propulsion system as claimed in claim 1, further comprising a second offset arm (BD2) connected between the second motorised link (L2; L2b) and the propulsion unit (51).

3. Propulsion system as claimed in one of the preceding claims, **characterised in that** the motorised mechanism (52; 52b; 52c) comprises means for supplying energy from the structure (20) of the satellite (10) to the propulsion unit (51) and/or the motorised mechanism (52; 52b; 52c).

4. Satellite in earth orbit provided with a propulsion system as claimed in one of claims 1 to 3, **characterised in that** it comprises a parallelepiped structure (20), and **in that** the propulsion unit (51) and the motorised mechanism (52; 52b; 52c) are maintained, in a storage configuration, against one of the faces of the structure (20) of the satellite (10), the propulsion unit (51) and the motorised mechanism (52; 52b; 52c) being released, then reoriented in an operational configuration.

5. Satellite in earth orbit provided with a propulsion system as claimed in one of claims 1 to 4, **characterised in that** it comprises a parallelepiped structure (20), and **in that** the first motorised link (L1; L1b) is fixed in the vicinity of the middle of an edge of the structure (20), and **in that** the offset arm (BD) is maintained in the storage configuration against a face adjacent to this edge and substantially parallel to this edge.

6. Satellite in earth orbit provided with a propulsion system as claimed in claim 2, **characterised in that** it comprises a parallelepiped structure (20), and **in that** the first motorised link (L1; L1b) is fixed in the vicinity of an edge of the structure (20), and **in that** the first rigid offset arm (BD) and the second offset arm (BD2) are maintained in the storage configuration against a face adjacent to this edge and substantially parallel to this edge.

7. Satellite in geostationary orbit provided with a propulsion system as claimed in one of claims 1 to 3, **characterised in that** a first propulsion system (500) is fixed to the structure (20) of the satellite (100) by a north side relative to the plane of the orbit (11), and **in that** a second propulsion system (501) is fixed to the structure (20) of the satellite (100) by a south side relative to the plane of the orbit (11), the ignition of the propulsion systems (500, 501) for several positions of the satellite (100) on the orbit (11) allowing six orbital parameters of the satellite (100) to be controlled.

8. Satellite in geostationary orbit as claimed in claim 7, **characterised in that** the two propulsion systems (500, 501) are, in a configuration suitable for orbit transfer, positioned and oriented so that the forces delivered by the propulsion units of each of the two propulsion systems (500, 501) generate a thrust on the satellite in a desired direction and with a controlled torque, with the aim of generating torque being to assist the attitude control of the satellite or to control the angular momentum of the satellite.

9. Satellite in geostationary orbit provided with a propulsion system as claimed in one of claims 1 to 3, **characterised in that** a first propulsion system (500) is fixed to the structure (20) of the satellite (101) by a north or south side relative to the plane of the orbit (11), and **in that** a second propulsion system (502) is fixed to the structure (20) of the satellite (101) by the same side as the first propulsion system (500), the ignition of the propulsion systems (500, 502) for several positions of the satellite (101) on the orbit (11) allowing six orbital parameters of the satellite to be controlled.

10. Satellite in geostationary orbit as claimed in claim 9, **characterised in that** the propulsion units of each of the propulsion systems (500, 502) are oriented so as to deliver a force along an axis not passing through a centre of mass (CM) of the satellite, and **in that** the simultaneous ignition of the propulsion units is able to generate zero torque.

11. Satellite in earth orbit as claimed in claim 9 or 10, **characterised in that** the propulsion units of each of the propulsion systems (500, 502) are oriented so as to deliver a force along an axis not passing through a centre of mass (CM) of the satellite with the aim of generating a thrust having a significant component along the axis perpendicular to the orbit.
